# EUROPEAN PATENT SPECIFICATION

(11) **EP 3 885 203 B1**
(45) Date of publication and mention of the grant of the patent: **22.11.2023**
(21) Application number: 20782270.1
(22) Date of filing: 02.04.2020
(51) Int. Cl.: B60R 25/20, B60R 25/24, B60Q 1/26, G07C 9/00, B60Q 1/02, B60Q 1/24

(54) **HUMAN-VEHICLE INTERACTION METHOD AND SYSTEM DURING VEHICLE UNLOCKING, AND VEHICLE**
VERFAHREN UND SYSTEM ZUR MENSCH-FAHRZEUG-INTERAKTION BEIM ENTRIEGELN EINES FAHRZEUGS UND FAHRZEUG
PROCÉDÉ ET SYSTÈME D'INTERACTION HOMME-VÉHICULE PENDANT UN DÉVERROUILLAGE DE VÉHICULE, ET VÉHICULE

(30) Priority: 03.04.2019 CN 201910267518
(43) Date of publication of application: 29.09.2021
(73) Proprietor: Guangzhou Xiaopeng Autopilot Technology Co., Ltd., Guangzhou, Guangdong 510640 (CN)
(72) Inventor: LIU, Yilin, Guangzhou, Guangdong 510640 (CN); LU, Yuzhe, Guangzhou, Guangdong 510640 (CN); YE, Yihang, Guangzhou, Guangdong 510640 (CN); GUO, Yandong, Guangzhou, Guangdong 510640 (CN)
(74) Representative: Ran, Handong
(86) International application number: PCT/CN2020/083061
(87) International publication number: WO 2020/200294

(56) References cited:
- WO-A1-2017/018349
- CN-U- 208 602 395
- JP-A- 2009 057 014
- JP-A- 2015 033 897
- US-A1- 2018 027 634

## Description

### TECHNICAL FIELD

The present disclosure relates to the field of intelligent vehicle technologies, and more particularly, to a method and system for human-vehicle interaction during vehicle unlocking, and a vehicle.

### BACKGROUND

With the increase in car ownership, driving has become a daily way for people to travel. To ensure safety of vehicles, most drivers lock the vehicles after parking. Correspondingly, before restarting the vehicles, the drivers need to perform an unlocking operation to unlock the vehicles.

At present, the unlocking operation for most of the vehicles may be performed by means of wireless remote control. Some vehicles are more sensitive to reception of wireless signals, so the drivers can successfully unlock the vehicles far away from the vehicles. However, due to a long distance, there may likely exist various factors diverting attentions of the drivers when they walk from positions where the vehicles are unlocked to roads next to the vehicles. As a result, the drivers may press unlock buttons again when they get back to the vehicles because they have forgotten performing the unlocking operation, which may cause the drivers to perform unnecessary unlocking operations for many times.

Document "Novel usher's lamp control system" (CN208602395U) discloses a novel usher's lamp control system belongs to care light control field. It includes radiofrequency signal processing module, control module, a left side/right front illuminator driver chip group and pixel formula LED head -light, and radiofrequency signal processing module passes through the CAN bus with control module and links to each other, control module organizes with a left side/right front illuminator driver chip and links to each other through the UART bus, a left side / right front illuminator driver chip group passes through ferroelectric phase even with pixel formula LED head -light, but radiofrequency signal processing module's identifiable area scope divides the coverage that every LED lamp pearl is shone in the pixel formula LED head -light into.

### SUMMARY

Embodiments of the present disclosure disclose a method and system for human-vehicle interaction during vehicle unlocking, and a vehicle, to reduce number of times of unlocking operations for a user, and to improve user experience. The present invention is set out by the appended claims.

A first aspect of the embodiments of the present disclosure discloses a method for human-vehicle interaction during vehicle unlocking, wherein the method includes:
unlocking the vehicle when an unlocking instruction for the vehicle is received;
detecting movement information of a pedestrian outside the vehicle after the vehicle is unlocked; and
controlling an exterior LED strip light of the vehicle to output a first headlight effect in response to movement of the pedestrian.

As an alternative implementation, in the first aspect of the embodiments of the present disclosure, after receiving the unlocking instruction, the method also includes:
controlling an initial light-emitting diode (LED) chip preinstalled in the exterior LED strip light of the vehicle to be lighted up.

The controlling an exterior LED strip light of the vehicle to output a first headlight effect in response to movement of the pedestrian includes:
determining, according to a pedestrian movement direction included in the movement information, a shifting direction of the LED chip corresponding to the pedestrian movement direction;
determining limit number of mobile LED chips according to total number of LED chips of the exterior LED strip light, number of the initial LED chips, and positions of the initial LED chips;
determining, according to the limit number of the LED chips and a preset first angle, an angle corresponding to each of the mobile LED chips, wherein the first angle is an angle between a central axis of the vehicle and a detection range boundary of a real-time pedestrian position included in the movement information;
determining, according to the angle between the real-time pedestrian position and the central axis and the angle corresponding to each of the mobile LED chips in the exterior LED strip light, an LED chip movement quantity corresponding to the real-time pedestrian position; and
shifting, on a basis of the initial LED chip, a target LED chip to be lighted up by a position of the LED chip shifting quantity according to the shifting direction of the LED chip, to output the first headlight effect in response to movement of the pedestrian by lighting up the target LED chip.

As an alternative implementation, in the first aspect of the embodiments of the present disclosure, the controlling an initial LED chip preinstalled in the exterior LED strip light of the vehicle to be lighted up includes:
controlling a first number of LED chips, on a left side of the central axis, in the exterior LED strip light of the vehicle to be lighted up to form a first light strip;
controlling a second number of LED chips, on a right side of the central axis, in the exterior LED strip light of the vehicle to be lighted up to form a second light strip; and
controlling a third number of LED chips between the first light strip and the second light strip to remain extinguished.

Sum of the first number and the second number is equal to the number of the initial LED chips.

As an alternative implementation, in the first aspect of the embodiments of the present disclosure, the detecting movement information of a pedestrian outside the vehicle includes:
determining, when it is detected that a pedestrian exists outside the vehicle, whether the pedestrian is on the same side of the vehicle; and
detecting, if the determination result is YES, a real-time position of a pedestrian closest to the vehicle when it is detected that more than one pedestrian is outside the vehicle, and obtaining the movement information of the pedestrian outside the vehicle according to the real-time position.

As an alternative implementation, in the first aspect of the embodiments of the present disclosure, the method also includes:
controlling the vehicle to output a first sound effect corresponding to the unlocking instruction.

As an alternative implementation, in the first aspect of the embodiments of the present disclosure, the method also includes:
controlling, when receiving a vehicle-locating instruction for the vehicle, the vehicle to output a second headlight effect and a second sound effect corresponding to the vehicle-locating instruction; and
controlling, when receiving the unlocking instruction, the vehicle to stop outputting the second headlight effect and the second sound effect.

A second aspect of the embodiments of the present disclosure discloses a system for human-vehicle interaction, which includes:
an unlocking unit, configured to unlock the vehicle when an unlocking instruction for the vehicle is received;
a detecting unit, configured to detect movement information of a pedestrian outside the vehicle after the vehicle is unlocked; and
a first control unit, configured to control an exterior LED strip light of the vehicle to output a first headlight effect in response to movement of the pedestrian.

As an alternative implementation, in the second aspect of the embodiments of the present disclosure:
the first control unit is also configured to control an initial LED chip preinstalled in the exterior LED strip light of the vehicle to be lighted up after receiving the unlocking instruction.

A specific implementation of the first control unit being configured to control the exterior LED strip light of the vehicle to output the first headlight effect in response to movement of the pedestrian may be as below.

The first control unit is configured to: determine, according to the pedestrian movement direction included in the movement information, the shifting direction of the LED chip corresponding to the pedestrian movement direction; determine limit number of mobile LED chips according to total number of LED chips of the exterior LED strip light, number of the initial LED chips, and positions of the initial LED chips; determine, according to the limit number of the LED chips and a preset first angle, an angle corresponding to each of the mobile LED chips, the first angle being an angle between a central axis of the vehicle and a detection range boundary of a real-time pedestrian position comprised in the movement information; determine, according to the angle between the real-time pedestrian position and the central axis and the angle corresponding to each of the mobile LED chips in the exterior LED strip light, an LED chip movement quantity corresponding to the real-time pedestrian position; and move, on a basis of the initial LED chip, the target LED chip to be lighted up by a position of the LED chip movement quantity according to the shifting direction of the LED chip, to output the first headlight effect in response to movement of the pedestrian by lighting up the target LED chip. As an alternative implementation, in the second aspect of the embodiments of the present disclosure, a specific implementation of the first control unit being configured to control an initial LED chip preinstalled in the exterior LED strip light of the vehicle to be lighted up may be as below.

The first control unit is configured to: control a first number of LED chips, on a left side of the central axis, in the exterior LED strip light of the vehicle to be lighted up to form a first light strip; control a second number of LED chips, on a right side of the central axis, in the exterior LED strip light of the vehicle to be lighted up to form a second light strip; and control a third number of LED chips between the first light strip and the second light strip to remain extinguished.

Sum of the first number and the second number is equal to the number of the initial LED chips.

As an alternative implementation, in the second aspect of the embodiments of the present disclosure:
the detecting unit is specifically configured to: determine, when unlocking the vehicle and detecting that a pedestrian exists outside the vehicle, whether the pedestrian is on the same side of the vehicle; and detect, if the determination result is YES, a real-time position of a pedestrian closest to the vehicle when it is detected that more than one pedestrian is outside the vehicle, and obtain the movement information of the pedestrian outside the vehicle according to the real-time position.

As an alternative implementation, in the second aspect of the embodiments of the present disclosure, the system also includes:
a second control unit, configured to control the vehicle to output a first sound effect corresponding to the unlocking instruction.

As an alternative implementation, in the second aspect of the embodiments of the present disclosure, the first control unit is also configured to control, when receiving a vehicle-locating instruction for the vehicle, the vehicle to output a second headlight effect corresponding to the vehicle-locating instruction, and control the vehicle to stop outputting the second headlight effect when receiving the unlocking instruction.

The second control unit is also configured to control, when receiving a vehicle-locating instruction for the vehicle, the vehicle to output a second sound effect corresponding to the vehicle-locating instruction, and control the vehicle to stop outputting the second sound effect when receiving the unlocking instruction.

A third aspect of the embodiments of the present disclosure discloses a vehicle, which includes any one of the systems for human-vehicle interaction disclosed in the second aspect of the embodiments of the present disclosure.

A fourth aspect of the present disclosure discloses a computer-readable storage medium, storing a computer program, wherein the computer program enables a computer to perform any one of the methods disclosed in the first aspect of the embodiments of the present disclosure.

A fifth aspect of the embodiments of the present disclosure discloses a computer program product. The computer program product is executable by a computer, whereby the computer is configured to perform any one of the methods disclosed in the first aspect of the embodiments of the present disclosure.

Compared with the existing technologies, the embodiments of the present disclosure have following beneficial effects.

In the embodiments of the present disclosure, after a user triggers to unlock a vehicle, the vehicle may detect movement information of a pedestrian outside the vehicle and may further control headlight of the vehicle to shift in response to movement of the pedestrian, such that the user is always accompanied by the headlight from a moment when the user successfully unlocks the vehicle until the user walks next to the vehicle. As can be seen, the user may be prompted that the vehicle has been unlocked by means of continuous headlight output, such that the user does not need to repeat unnecessary unlocking operations. In this way, number of times of the unlocking operations is reduced for the user, and user experience is improved. Furthermore, the headlight moves in response to movement of the pedestrian, such that and a more interactive experience may be provided for the user, allowing headlight effects of the vehicle to be more intelligent.

### BRIEF DESCRIPTION OF THE DRAWINGS

To describe the technical solutions of the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG 1 illustrates a schematic flow chart of a method for human-vehicle interaction during vehicle unlocking according to an embodiment of the present disclosure;
FIG 2 illustrates a schematic diagram of a through-type LED strip according to an embodiment of the present disclosure;
FIG 3 illustrates a schematic flow chart of another method for human-vehicle interaction during vehicle unlocking according to an embodiment of the present disclosure;
FIG 4 illustrates a schematic diagram of a headlight effect of initial LED chips lighted up according to an embodiment of the present disclosure;
FIG 5 illustrates a schematic diagram of another headlight effect of initial LED chips lighted up according to an embodiment of the present disclosure;
FIG 6 illustrates a schematic diagram of a first headlight effect outputted in response to movement of a pedestrian according to an embodiment of the present disclosure;
FIG 7 illustrates a schematic diagram of another first headlight effect outputted in response to movement of the pedestrian according to an embodiment of the present disclosure;
FIG 8 illustrates a schematic diagram of control logic of a headlight effect according to an embodiment of the present disclosure;
FIG 9 illustrates a schematic flow chart of still another method for human-vehicle interaction during vehicle unlocking according to an embodiment of the present disclosure;
FIG 10 illustrates a schematic structural diagram of a system for human-vehicle interaction according to an embodiment of the present disclosure;
FIG 11 illustrates a schematic structural diagram of another system for human-vehicle interaction according to an embodiment of the present disclosure; and
FIG 12 illustrates a schematic structural diagram of still another system for human-vehicle interaction according to an embodiment of the present disclosure.

### DETAILED DESCRIPTION

Technical solutions in the embodiments of the present disclosure will be described clearly and completely below with reference to the accompanying drawings in the embodiments of the present disclosure. Apparently, the described embodiments are some but not all of the embodiments of the present disclosure. All other embodiments obtained by those of ordinary skills in the art based on the embodiments of the present disclosure without creative efforts shall fall within the protection scope of the present disclosure.

It is to be noted that the terms "comprise" and "have" as well as any variants thereof in the embodiments of the present disclosure and the accompanying drawings are intended to cover non-exclusive inclusion. For example, processes, methods, systems, products or devices comprising a series of steps or units are not limited to these listed steps or units. Alternatively, other steps or units that are not listed are also comprised, or alternatively, other steps or units inherent to these processes, methods, systems, products or devices are further comprised.

Embodiments of the present disclosure disclose a method and system for human-vehicle interaction during vehicle unlocking, and a vehicle, to reduce number of times of unlocking operations for a user, and to improve user experience. Detailed descriptions are given below, respectively.

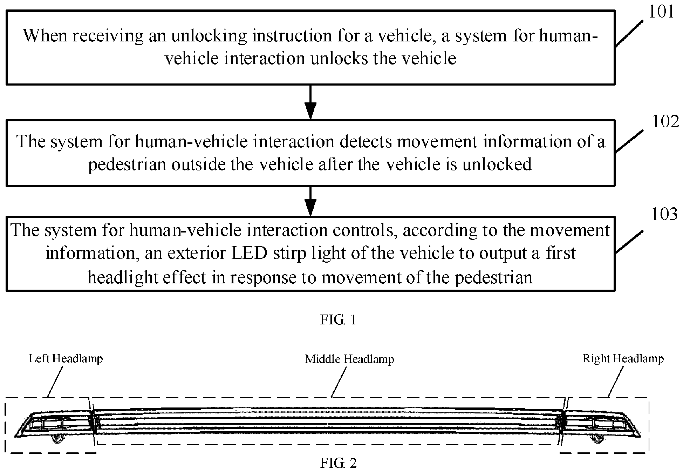

With reference to FIG 1, FIG 1 illustrates a schematic flow chart of a method for human-vehicle interaction during vehicle unlocking according to an embodiment of the present disclosure. As shown in FIG 1, the method for human-vehicle interaction during vehicle unlocking may include following steps.

101, when receiving an unlocking instruction for a vehicle, a system for human-vehicle interaction unlocks the vehicle.

In this embodiment of the present disclosure, the system for human-vehicle interaction may receive the unlocking instruction for the vehicle in any one of the following ways. 1. It is received the unlocking instruction transmitted by an electronic key of the vehicle via a wireless signal. 2. It is received the unlocking instruction transmitted by a mobile terminal such as a smart phone having a communication connection with the vehicle. 3. Identity recognition is performed on a face image captured by a camera of the vehicle, and the unlocking instruction is triggered when a face in the face image is recognized as a preset authenticated face. 4. It is recognized a user fingerprint detected by a fingerprint recognition module arranged on a door handle of the vehicle, and the unlocking instruction is triggered when the user fingerprint is recognized as an authenticated fingerprint.

Communications between the vehicle and the electronic key may be achieved by means of Near Field Communication (NFC) or Radio Frequency (RF) and other communication modes. Specifically, the user may press an unlock button of the electronic key to trigger the electronic key to transmit the unlocking instruction; or the electronic key automatically transmits the unlocking instruction when entering within a wireless signal reception range of the vehicle. In addition, the mobile terminal such as the smart phone may be loaded with an application (APP). Specifically, the user may press the unlock button through the APP to trigger the mobile terminal to transmit the unlocking instruction. Further, the vehicle may recognize whether a person getting close to the vehicle is a preset authenticated user by means of identity recognition technologies such as face recognition or fingerprint recognition. The unlocking instruction is triggered to automatically unlock the vehicle if the person is the preset authenticated user. The preset authenticated user may be a user who has been authenticated in advance, such as a vehicle owner or family members or friends of the vehicle owner.

It is to be understood that the system for human-vehicle interaction may unlock the vehicle according to the unlocking instruction, such that a door of the vehicle can be opened from the outside.

102, the system for human-vehicle interaction detects movement information of a pedestrian outside the vehicle after the vehicle is unlocked.

In this embodiment of the present disclosure, the movement information of the pedestrian outside the vehicle may at least include a real-time pedestrian position and a pedestrian movement direction. Specifically, the pedestrian outside the vehicle may be captured by a camera, and a target pedestrian may be tracked in continuously captured multi-frame images, to determine the real-time pedestrian position and the pedestrian movement direction of this pedestrian. Alternatively, the pedestrian outside the vehicle may be detected by means of a radar sensor such as lidar or ultrasonic radar, and the real-time pedestrian position and the pedestrian movement direction are determined by analyzing a reflected wave of radar. However, the embodiments of the present disclosure are not limited thereto. The above-mentioned camera may be a camera arranged on a vehicle head facing a travel direction of the vehicle, or may be a camera arranged on a vehicle roof. The camera arranged on the vehicle roof is connected to a vehicle roof support device, wherein the vehicle roof support device includes a mechanical arm, which may drive the camera to ascend or descend and rotate, such that a view-finding coverage of the camera may include surrounding environment of the vehicle.

103, the system for human-vehicle interaction controls, according to the movement information, an exterior LED strip light of the vehicle to output a first headlight effect in response to movement of the pedestrian.

In this embodiment of the present disclosure, the LED strip light of the vehicle may be composed of a plurality of LED chips, and the system for human-vehicle interaction can control flicker of each of the LED chips. Specifically, the LED strip light of the vehicle may be a through-type LED strip as shown in FIG 2. The through-type LED strip may be arranged on any position of the vehicle body, including but not limited to the vehicle head or a vehicle tail of the vehicle.

It is to be understood that the first headlight effect may specifically behave as headlight shifting in response to movement of the pedestrian. For example, assuming that at a moment T1 it is detected that the real-time pedestrian position in the movement information is on a left side of a central axis of the vehicle, a left headlamp in the through-type LED strip as shown in FIG 2 is lighted up, and a middle headlamp and a right headlamp both remain extinguished. Assuming that at a moment T2 after the moment T1 it is detected that the real-time pedestrian position in the movement information is on a right side of the central axis of the vehicle, the right headlamp is controlled to be lighted up, and the middle headlamp and the left headlamp both remain extinguished. In the above example, between the moment T1 and the moment T2, the pedestrian moves from the left side of the central axis to the right side of the central axis of the vehicle. Accordingly, headlight output is shifted from the left headlamp to the right headlamp of the vehicle, creating the effect characterized by the headlight shifting in response to movement of the pedestrian. Further, brightness of the LED chips lighted up and a specific pattern of manifestation thereof may be preset. Taking the right headlamp to be lighted up as an example, when the right headlamp is lighted up, the right headlamp may be controlled to remain ON at a preset brightness, or the right headlamp may be controlled to flicker at a preset brightness at preset time intervals, or the right headlamp may be controlled to be lighted up with a headlight effect of waterfall light. However, the embodiments of the present disclosure are not limited thereto.

By performing the above steps 101 to 104, the vehicle may output the first headlight effect in response to movement of the pedestrian outside the vehicle. Therefore, even if the user successfully unlocks the vehicle far away from the vehicle by means of the electronic key or the APP installed in the mobile phone, in the process when the user gets close to the vehicle, the vehicle may prompt the user that the vehicle has been unlocked by means of the first headlight effect characterized by the headlight shifting in response to movement of the user. In addition, as an alternative implementation, a duration (such as 20min) of the first headlight effect may be preset, and when an output duration of the first headlight effect reaches the duration, it is stopped outputting the first headlight effect. That is, if the output duration of the first headlight effect exceeds the preset duration, it is stopped outputting the first headlight effect to reduce power consumption even if the movement information of the pedestrian outside the vehicle is still detected. Alternatively, if the operation of opening a vehicle door is not detected within the preset duration after the vehicle is unlocked, the system for human-vehicle interaction automatically triggers to lock the vehicle and stops outputting the first headlight effect. That is, if the user fails in opening the vehicle door within the preset duration after the vehicle is unlocked, the vehicle is automatically locked and enters a locked state, and thus the vehicle stops outputting the first headlight effect. By implementing this implementation, the user may determine, according to a fact whether the vehicle outputs the first headlight effect, whether the current vehicle is in a locked state or an unlocked state.

As can be seen from the method described in FIG 1, after unlocking the vehicle according to the unlocking instruction, the system for human-vehicle interaction may detect the movement information of the pedestrian outside the vehicle in real time, thereby controlling the exterior LED strip light of the vehicle to output a headlight effect characterized by the headlight shifting in response to movement of the pedestrian. In this way, the user is prompted that the vehicle has been unlocked by means of the continuous headlight effect, such that the number of times of the unlocking operations is reduced for the user, the user experience is improved, and a more interactive headlight experience may be provided for the user.

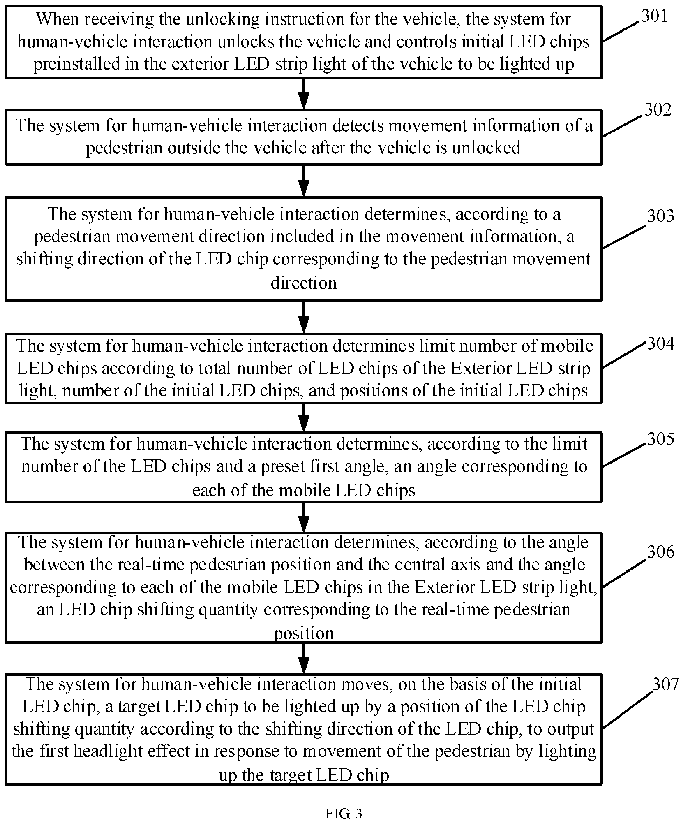

Referring to FIG 3, FIG 3 illustrates a schematic flow chart of another method for human-vehicle interaction during vehicle unlocking according to an embodiment of the present disclosure. As shown in FIG 3, the method for human-vehicle interaction during vehicle unlocking may include following steps.

301, when receiving the unlocking instruction for the vehicle, the system for human-vehicle interaction unlocks the vehicle and controls initial LED chips preinstalled in the exterior LED strip light of the vehicle to be lighted up.

In this embodiment of the present disclosure, the exterior LED strip light of the vehicle may be the through-type LED strip as shown in FIG 2, or may be a lamp separately arranged on two sides of the vehicle head or vehicle tail, etc. For the convenience of description, a description is made below by taking the through-type LED strip as an example, which should not constitute a limitation on the exterior LED strip light of the vehicle.

In this embodiment of the present disclosure, it may be preset which LED strips need to be lighted up after the vehicle is unlocked. It is to be understood that lighting up the initial LED chips is related to unlocking the vehicle, but has nothing to do with a fact whether a pedestrian outside the vehicle is detected. That is, after the unlocking instruction is detected and the vehicle is unlocked, the initial LED chips may be controlled to be lighted up even though no pedestrian outside the vehicle is detected at this moment.

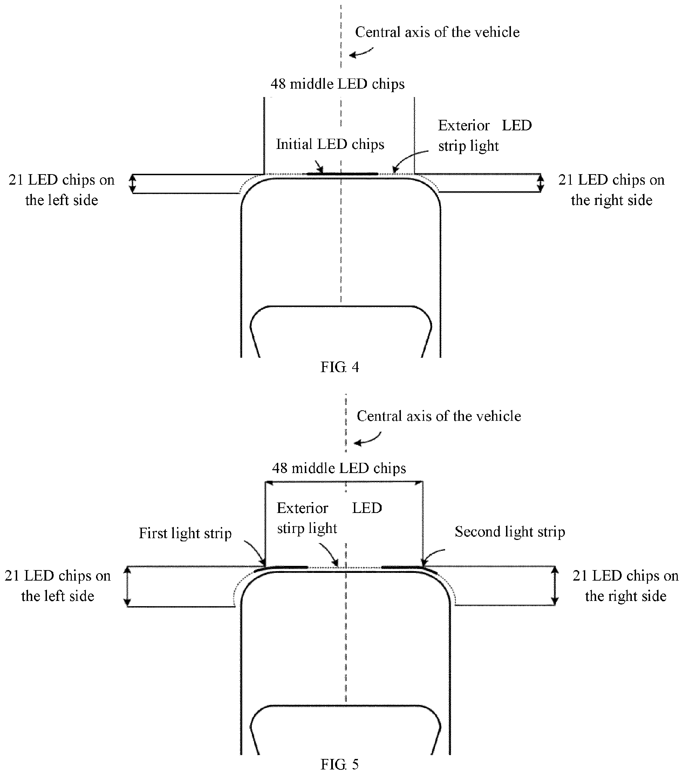

As an alternative implementation, the controlling initial LED chips preinstalled in the exterior LED strip light of the vehicle to be lighted up specifically may include: controlling the LED chips in the exterior LED strip light of the vehicle to be lighted up, wherein the LED chips are symmetrically spread to both sides with the central axis of the vehicle as a center. Taking the through-type LED strip arranged at the vehicle head as an example, the middle headlamp may be preset as the initial LED chips, and the middle headlamp may be lighted up after the vehicle is unlocked (as shown in FIG 4).

As another alternative implementation, the controlling initial LED chips preinstalled in the exterior LED strip light of the vehicle to be lighted up specifically may also include: controlling a first number of LED chips, on a left side of the central axis, in the exterior LED strip light of the vehicle to be lighted up to form a first light strip; controlling a second number of LED chips, on a right side of the central axis, in the exterior LED strip light of the vehicle to be lighted up to form a second light strip; and controlling a third number of LED chips between the first light strip and the second light strip to remain extinguished. That is, the first number of LED chips on the left side of the central axis and the second number of LED chips on the right side of the central axis are determined as the initial LED chips. After the initial LED chips are lighted up, two light strips shaped like "eyes" are formed, and the third number of LED chips between the two light strips remain extinguished to simulate an eye distance (as shown in FIG 5). Sum of the first number and the second number is equal to the number of the initial LED chips. Preferably, the first number and the second number may be equal, and the first light strip and the second light strip are centrosymmetrical about the central axis of the vehicle.

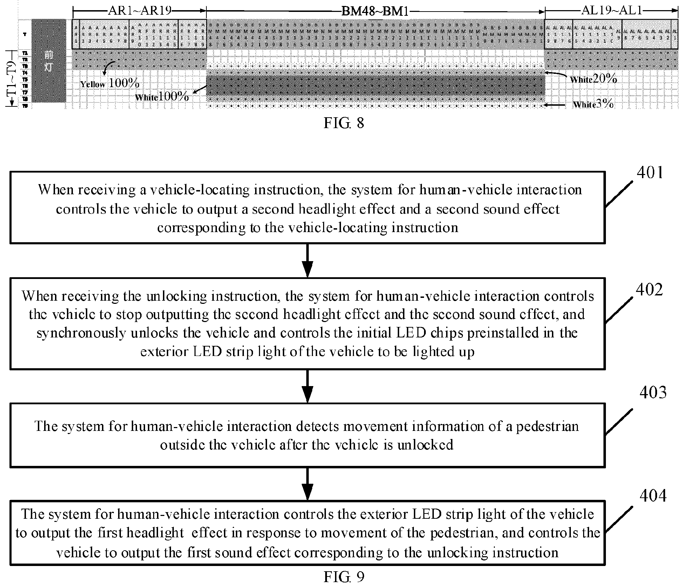

It is to be understood that brightness and/or color of the headlight can also be controlled when controlling the initial LED chips to be lighted up. For example, referring to FIG 8, FIG 8 illustrates a schematic diagram of control logic of a headlight effect according to an embodiment of the present disclosure. FIG 8 illustrates the control logic of a through-type lamp arranged on the vehicle head, wherein the through-type lamp may include the right headlamp (AR1~AR19 in FIG 8), the left headlamp (AL1~AR19 in FIG 8), and the middle headlamp (BM1~BM48 in FIG 8). A horizontal axis in FIG 8 represents a group of LED chips, wherein each group may include one or more LED chips. A vertical axis in FIG 8 represents time series indicative of a time trend, each grid on the vertical axis may be in units of t milliseconds, wherein t may be set manually (for example, set as 50). Instantaneous states corresponding to blank grids in FIG 8 indicate that the LED chips are OFF, and instantaneous states corresponding to the remaining grids in FIG 8 indicate that the LED chips are ON. As shown in FIG 8, at moments T1~T3, both the right headlamp and the left headlamp are lighted up in yellow at 100% brightness, and the middle headlamp remains extinguished. At moments T4∼T8, both the right headlamp and the left headlamp remain extinguished, and the middle headlamp is lighted up in white headlight at the brightness of 3%, 20%, 100%, 20%, and 3% in sequence.

302, the system for human-vehicle interaction detects movement information of a pedestrian outside the vehicle after the vehicle is unlocked.

303, the system for human-vehicle interaction determines, according to a pedestrian movement direction included in the movement information, a shifting direction of the LED chip corresponding to the pedestrian movement direction.

In this embodiment of the present disclosure, the shifting direction of the LED chip may be consistent with the pedestrian movement direction. That is, if the pedestrian movement direction indicates moving to the left side of the central axis, the corresponding shifting direction of the LED chip also indicates shifting to the left side of the central axis. If the pedestrian movement direction indicates moving to the right side of the central axis, the corresponding shifting direction of the LED chip also indicates shifting to the right side of the central axis.

304, the system for human-vehicle interaction determines limit number of mobile LED chips according to total number of LED chips of the exterior LED strip light, number of the initial LED chips, and positions of the initial LED chips.

In this embodiment of the present disclosure, the limit number of mobile LED chips refers to the maximum number of LED chips to be lighted up when the lighted LED chips shift to boundaries of left and right sides.

For example, supposing that the number of the lighted initial LED chips is 24, the number of the lighted initial LED chips on the left and right sides of the central axis is 12, respectively. As shown in FIG 4, the total number of the LED chips of the exterior LED strip light is 21+21+48=90. In this case, it may be concluded that the limit number of leftwards mobile LED chips is 33, and that the limit number of rightwards mobile LED chips is also 33.

As shown in FIG 5, supposing that among the lighted initial LED chips, the first light strip is composed of 11 ones of 21 LED chips on the left side and 6 ones of 48 middle LED chips closest to the LED chips on the left side, the second light strip is composed of 11 ones of 21 LED chips on the right side and 6 ones of 48 middle LED chips closest to the LED chips on the right side, and the remaining 36 LED chips between the first light strip and the second light strip remain extinguished, as can be seen from FIG 5, the total number of the LED chips of the exterior LED strip light is also 21+21+48=90. In this case, it may be concluded that the limit number of leftwards mobile LED chips in the first light strip is 10, and that the limit number of rightwards mobile LED chips in the second light strip is also 10.

305, the system for human-vehicle interaction determines, according to the limit number of the LED chips and a preset first angle, an angle corresponding to each of the mobile LED chips.

In this embodiment of the present disclosure, the preset first angle is an angle between the central axis of the vehicle and a detection range boundary of a real-time pedestrian position included in the movement information. The detection range of the real-time pedestrian position is related to a sensor configured to detect the pedestrian outside the vehicle. For example, if the movement information of the pedestrian outside the vehicle is detected using a camera, assuming that the camera is arranged on the central axis of the vehicle and the camera has a capture range of 90°, the above-mentioned first angle may be 45°. That is, the angle between the detectable real-time pedestrian position and the central axis of the vehicle ranges from 0° to 45°.

If it is required to implement the effect characterized by the headlight shifting in response to movement of the pedestrian, the target LED chips to be lighted up need to shift in response to variations of the angle between the real-time pedestrian position and the central axis of the vehicle. For example, supposing that the limit number of leftwards mobile LED chips is 10, the ten LED chips need to shift in response to variations of the angle 45°. In this case, the angle corresponding to each of the ten mobile LED chips is 45°/10=4.5°. That is, the number of the LED chips corresponding to 1° is 10/45°≈0.2222/°.

In Step 306, the system for human-vehicle interaction determines, according to the angle between the real-time pedestrian position and the central axis and the angle corresponding to each of the mobile LED chips in the exterior LED strip light, an LED chip shifting quantity corresponding to the real-time pedestrian position.

In this embodiment of the present disclosure, as can be seen from the above description of the angle corresponding to each of the mobile LED chips, each time when the target LED chip moves, on the basis of the initial LED chip, by a position of one LED chip, this is corresponding to a fact that the real-time position of the pedestrian deviates from the central axis of the vehicle by 4.5°. That is, each time when the real-time position of the pedestrian deviates from the central axis of the vehicle by 1°, this is corresponding to a fact that the target LED chip moves, on the basis of the initial LED chip, by a position of 0.2222 LED chip. Correspondingly, assuming that the angle between the current real-time pedestrian position and the central axis of the vehicle is x°, the number of the target LED chip needing to shift is x°/45° on the basis of the initial LED chip. That is, the number of the target LED chip needing to shift is 0.2222*x.

In Step 307, the system for human-vehicle interaction moves, on the basis of the initial LED chip, a target LED chip to be lighted up by a position of the LED chip shifting quantity according to the shifting direction of the LED chip, to output the first headlight effect in response to movement of the pedestrian by lighting up the target LED chip.

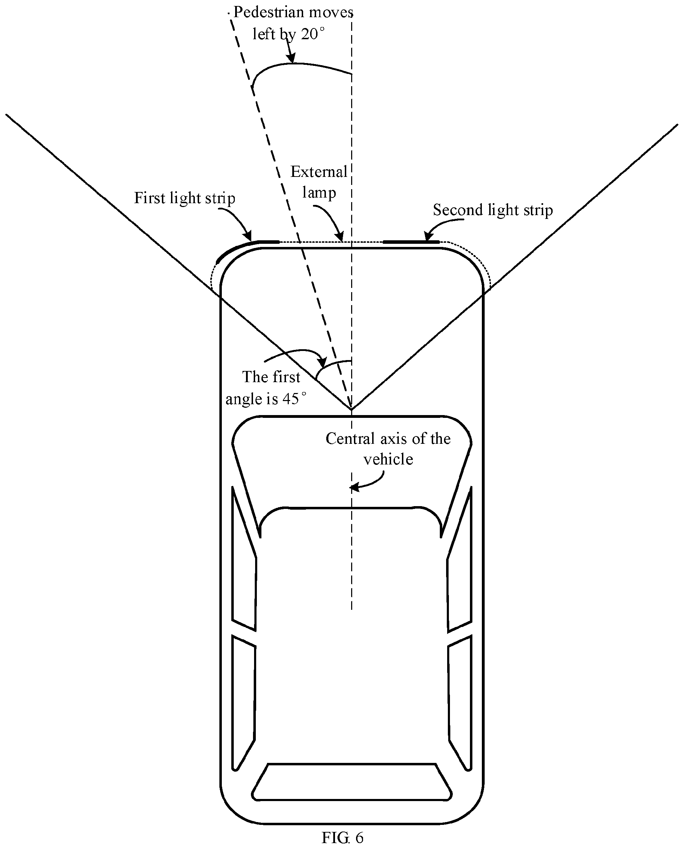

In this embodiment of the present disclosure, the LED chip shifting quantity is corresponding to the real-time pedestrian position, and the shifting direction of the LED chip is corresponding to the pedestrian movement direction. In this way, the effect characterized by the headlight shifting in response to movement of the pedestrian may be created. For example, referring to FIG. 6, FIG 6 illustrates a schematic diagram of the first headlight effect outputted in response to movement of the pedestrian according to an embodiment of the present disclosure. Assuming that the currently detected real-time position of the pedestrian deviates leftwards from the central axis of the vehicle by 20°, the target LED chip may shift to left, on the basis of the initial LED chip, by a position of 0.2222*20=4.4444 LED chips, which is rounded to shifting to left by the position of 4 LED chips.

In addition, assuming that the initial LED chips are as shown in FIG 5, two light strips are contained. As an alternative implementation, the shifting, on the basis of the initial LED chip, a target LED chip to be lighted up by a position of the LED chip shifting quantity according to the shifting direction of the LED chip, to output the first headlight effect in response to movement of the pedestrian by lighting up the target LED chip may include:
controlling the first light strip and the second light strip to synchronously shift by the position of the LED chip shifting quantity according to the shifting direction of the LED chip. That is, as shown in FIG 6, the first light strip and the second light strip synchronously shift to left by the positions of four LED chips, and 36 LED chips between the first light strip and the second light strip remain extinguished.

In some possible specific scenarios, the above-mentioned implementation may be limited by limit shifting quantity of the LED chips, and cannot shift well in response to movement of the pedestrian. For example, supposing that the pedestrian moves from a position deviating leftwards from the central axis by 20° to a position deviating rightwards from the central axis by 41°, in the whole shifting process, the number of the target LED chips needing to shift is 0.2222*(20+41)=4.4444+9.1102=13.5546, which is rounded to 14. However, if the first light strip and the second light strip synchronously shift while keeping 36 LED chips therebetween, this will be limited by a limit number of 10 mobile LED chips, by which the second light strip can shift to right. When the pedestrian moves to a position deviating rightwards from the central axis by 25°, the second light strip has been shifted to the rightmost position. This may cause a consequence that the second light strip cannot shift in response to movement of the pedestrian in the process when the pedestrian moves from the position deviating rightwards from the central axis by 25° to the position deviating rightwards from the central axis by 41°.

As another alternative implementation, the shifting, on a basis of the initial LED chip, a target LED chip to be lighted up by a position of the LED chip shifting quantity according to the shifting direction of the LED chip, to output the first headlight effect in response to movement of the pedestrian by lighting up the target LED chip may also include:
recognizing a relative orientation of the real-time pedestrian position with respect to the central axis of the vehicle, and controlling the light strip corresponding to the relative orientation to shift by the position of the LED chip shifting quantity according to the shifting direction of the LED chip. When the relative orientation indicates that the real-time pedestrian position is on the left side of the central axis of the vehicle, the light strip corresponding to the relative orientation is the first light strip. When the relative orientation indicates that the real-time pedestrian position is on the right side of the central axis of the vehicle, the light strip corresponding to the relative orientation is the second light strip.

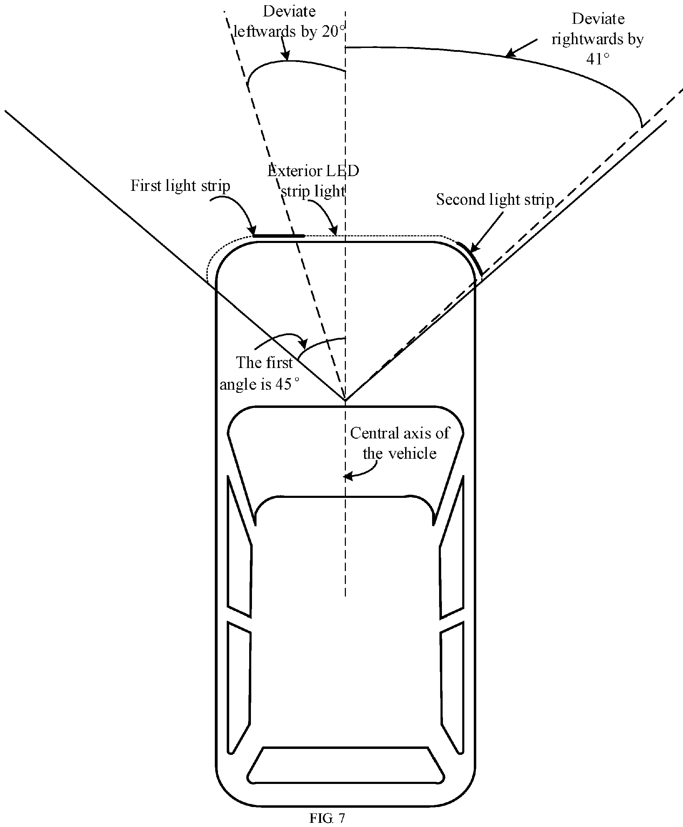

Referring to FIG 7, FIG 7 illustrates a schematic diagram of another first headlight effect outputted in response to movement of the pedestrian according to an embodiment of the present disclosure. As shown in FIG 7, supposing that the pedestrian moves from the position deviating leftwards from the central axis by 20° to the position deviating rightwards from the central axis by 41°, at an initial moment in the whole shifting process, the first light strip corresponds to the real-time pedestrian position deviating leftwards from the central axis by 20°. That is, the first light strip moves left by the positions of four LED chips on the basis of the positions of the initial LED chips. As the pedestrian gradually moves right, when the pedestrian moves to the front of the central axis of the vehicle, i.e., when the angle between the real-time pedestrian position and the central axis of the vehicle is 0°, the first light strip returns to the positions of the initial LED chips. Compared with the initial moment, the first light strip moves right by the positions of four LED chips. When the pedestrian gradually moves from the front of the central axis to the position deviating rightwards from the central axis by 41°, the second light strip moves right by the positions of 0.2222*41=9.1102, which is rounded to 9.

In conclusion, the Steps 303 to 307 are performed, and the system for human-vehicle interaction controls the exterior LED strip light of the vehicle to output a first headlight effect in response to movement of the pedestrian. Specifically, the first headlight effect is characterized by the headlight shifting in response to movement of the pedestrian.

As can be seen from the method described in FIG 3, after the system for human-vehicle interaction receives the unlocking instruction and unlocks the vehicle, the preinstalled initial LED chips may be first lighted up, thereby creating an initial effect of waiting for the vehicle to be woke up. When it is detected that a pedestrian outside the vehicle is moving, a headlight effect characterized by the headlight shifting in response to movement of the pedestrian is outputted. Further, a headlight effect similar to "eyes" may be created by outputting two light strips. During the movement of the pedestrian, the "eyes" of the vehicle also move, thereby creating a more interactive human-vehicle interaction effect.

Referring to FIG 9, FIG 9 illustrates a schematic flow chart of still another method for human-vehicle interaction during vehicle unlocking according to an embodiment of the present disclosure. As shown in FIG 9, the method for human-vehicle interaction during vehicle unlocking may include following steps.

401, when receiving a vehicle-locating instruction, the system for human-vehicle interaction controls the vehicle to output a second headlight effect and a second sound effect corresponding to the vehicle-locating instruction.

In this embodiment of the present disclosure, the user may trigger the vehicle-locating instruction before unlocking the vehicle. Specifically, the system for human-vehicle interaction may receive the vehicle-locating instruction transmitted by an electronic key of the vehicle via a wireless signal, and the user may trigger the electronic key to transmit the vehicle-locating instruction by long pressing an unlock button of the electronic key; or the system for human-vehicle interaction may receive the vehicle-locating instruction transmitted by a mobile terminal such as a smart phone having a communication connection with the vehicle. However, the embodiments of the present disclosure are not limited thereto.

In addition, the second headlight effect and the second sound effect may be bound with the vehicle-locating instruction in advance. By outputting the second headlight effect and the second sound effect, the user may be helped to locate the specific parking position of the vehicle. For example, the second headlight effect may be set as alternately flickering by the through-type LED strips arranged on the vehicle head and the vehicle tail, and the second sound effect may be set as honking.

402, when receiving the unlocking instruction, the system for human-vehicle interaction controls the vehicle to stop outputting the second headlight effect and the second sound effect, and synchronously the system for human-vehicle interaction unlocks the vehicle and controls the initial LED chips preinstalled in the exterior LED strip light of the vehicle to be lighted up.

In this embodiment of the present disclosure, if the unlocking instruction is received, it may be considered that the user has located the specific parking position of the vehicle under the guidance of the second headlight effect and the second sound effect. In this case, output of the second headlight effect and the second sound effect corresponding to the vehicle-locating instruction may be stopped, and it is switched to the headlight effect corresponding to the unlocking instruction. Alternatively, the system for human-vehicle interaction may also synchronously output the first sound effect corresponding to the unlocking instruction.

In addition, play duration or number of loops of the second headlight effect and the second sound effect may also be preset. If the play duration of the second headlight effect and the second sound effect reaches the preset play duration, or if the number of loops of the second headlight effect and the second sound effect reaches the preset number of loops, the vehicle may be controlled to stop outputting the second headlight effect and the second sound effect to reduce power consumption even if no unlocking instruction is detected.

403, the system for human-vehicle interaction detects movement information of a pedestrian outside the vehicle after the vehicle is unlocked.

In this embodiment of the present disclosure, when detecting that pedestrians exist outside the vehicle, the system for human-vehicle interaction may first determine whether the pedestrians are on the same side of the vehicle, and detect the number of the pedestrians if the pedestrians are on the same side of the vehicle. This flow is ended if the pedestrians are not on the same side of the vehicle. When the number of the pedestrians outside the vehicle is more than one, the movement information of the pedestrians outside the vehicle detected by the system for human-vehicle interaction is a real-time position of a pedestrian closest to the vehicle, and the system for human-vehicle interaction may obtain the movement information of the pedestrians outside the vehicle based on this real-time position. The pedestrians outside the vehicle may be on any one of a front side, a rear side, a left side and a right side of the vehicle. When it is detected that all the pedestrians are on the same side of the vehicle, subsequent steps are proceeded to trigger the headlight effect. Otherwise, the vehicle does not output any headlight effect. In addition, when more than one pedestrian is outside the vehicle, the pedestrian closest to the vehicle is determined as a detection target.

404, the system for human-vehicle interaction controls the exterior LED strip light of the vehicle to output the first headlight effect in response to movement of the pedestrian, and controls the vehicle to output the first sound effect corresponding to the unlocking instruction.

In this embodiment of the present disclosure, a specific implementation of the system for human-vehicle interaction controlling the exterior LED strip light of the vehicle to output the first headlight effect in response to movement of the pedestrian may be as shown in the above Steps 303 to 307. Description of the following contents is omitted. In addition, in this embodiment of the present disclosure, the system for human-vehicle interaction not only can prompt the user through headlight, but also can prompt the user through sound. That is, the system for human-vehicle interaction can prompt the user visually and auditorily to enhance a prompt effect.

As can be seen from the method described in FIG 9, the system for human-vehicle interaction may assist the user to locate the vehicle by means of the second headlight effect and the second sound effect. After the user successfully locates the vehicle and unlocks the vehicle, the system for human-vehicle interaction may continuously output the first headlight effect and the second sound effect to prompt the user that the vehicle has been unlocked, to enhance the prompt effect visually and auditorily. Further, the first headlight effect is characterized by the headlight shifting in response to movement of the pedestrian. Specifically, when there is more than one pedestrian outside the vehicle, the first headlight effect interacts with the pedestrian closest to the vehicle, such that the pedestrian closest to the vehicle may the most intuitively experience the headlight effect outputted from the vehicle. In this way, the human-vehicle interaction experience can be maximized, making the human-vehicle interaction more intelligent.

### Embodiment IV

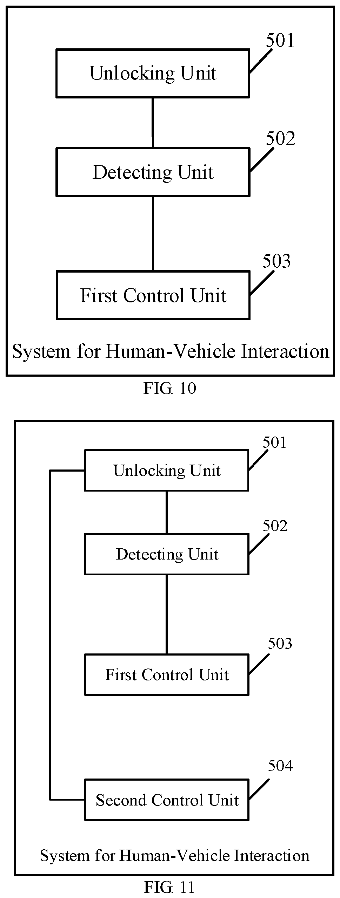

Referring to FIG 10, FIG 10 illustrates a schematic structural diagram of a system for human-vehicle interaction according to an embodiment of the present disclosure. As shown in FIG 10, the system for human-vehicle interaction may include:
an unlocking unit 501, configured to unlock a vehicle when an unlocking instruction for the vehicle is received.

In this embodiment of the present disclosure, the unlocking unit 501 specifically may receive the unlocking instruction transmitted by the electronic key of the vehicle via a wireless signal. The unlocking unit 501 may also receive the unlocking instruction transmitted by a mobile terminal such as a smart phone having a communication connection with the vehicle. The unlocking unit 501 may also perform identity recognition on a face image captured by a camera of the vehicle, and trigger the unlocking instruction when a face in the face image is recognized as a preset authenticated face. The unlocking unit 501 may also recognize a user fingerprint detected by a fingerprint recognition module arranged on a door handle of the vehicle, and trigger the unlocking instruction when the user fingerprint is recognized as an authenticated fingerprint.

A detecting unit 502 is configured to detect movement information of a pedestrian outside the vehicle after the vehicle is unlocked, wherein the movement information of the pedestrian outside the vehicle may at least include a real-time pedestrian position and a pedestrian movement direction.

A first control unit 503 is configured to control an exterior LED strip light of the vehicle to output a first headlight effect in response to movement of the pedestrian. The exterior LED strip light of the vehicle may be composed of a plurality of LED chips. Alternatively, the lamp of the vehicle may be a through-type LED strip, wherein the through-type LED strip may be arranged on any position of the vehicle body, including but not limited to the vehicle head or the vehicle tail of the vehicle.

In this embodiment of the present disclosure, the first headlight effect may specifically behave as headlight shifting in response to movement of the pedestrian. The first control unit 503 specifically may control brightness of the target LED chip lighted up and a specific pattern of manifestation thereof. Taking a right headlamp arranged on the vehicle head as an example, the first control unit 503 may control the right headlamp to remain ON at a preset brightness, or the first control unit 503 may control the right headlamp to flicker at a preset brightness at preset time intervals, or the first control unit 503 may control the right headlamp to be lighted up with a headlight effect of waterfall light. However, the embodiments of the present disclosure are not limited thereto.

In addition, as an alternative implementation, the first control unit 503 may also be configured to stop outputting the first headlight effect when an output duration of the first headlight effect reaches a preset duration. The first control unit 503 may also be configured to stop outputting the first headlight effect and trigger the vehicle to be automatically locked when the operation of opening a vehicle door is not detected within the preset duration after the unlocking unit 501 unlocks the vehicle.

By implementing the system for human-vehicle interaction as shown in FIG 10, after the vehicle is unlocked according to the unlocking instruction, the movement information of the pedestrian outside the vehicle may be detected in real time, to determine target LED chips to be lighted up. Furthermore, by controlling the target LED chips to be lighted up, the system for human-vehicle interaction outputs a headlight effect characterized by the headlight shifting in response to movement of the pedestrian, such that the user is prompted that the vehicle has been unlocked by means of the continuous headlight effect. In this way, the number of times of the unlocking operations is reduced for the user, the user experience is improved, and a more interactive headlight experience may be provided for the user.

Referring to FIG 11, FIG 11 illustrates a schematic structural diagram of another system for human-vehicle interaction according to an embodiment of the present disclosure. In the system for human-vehicle interaction as shown in FIG 11:
the first control unit 503 is also configured to control initial LED chips preinstalled in the exterior LED strip light of the vehicle to be lighted up after receiving the unlocking instruction for the vehicle.

Alternatively, a specific implementation of the first control unit 503 controlling the initial LED chips preinstalled in the exterior LED strip light of the vehicle to be lighted up may be as below.

The first control unit 503 is configured to: control a first number of LED chips, on a left side of the central axis, in the exterior LED strip light of the vehicle to be lighted up to form a first light strip; control a second number of LED chips, on a right side of the central axis, in the exterior LED strip light of the vehicle to be lighted up to form a second light strip; and control a third number of LED chips between the first light strip and the second light strip to remain extinguished. The sum of the first number and the second number is equal to the number of the initial LED chips. By implementing this implementation, the initial LED chips lighted up may form two light strips shaped like "eyes".

A specific implementation of the first control unit 503 being configured to control the exterior LED strip light of the vehicle to output the first headlight effect in response to movement of the pedestrian may be as below.

The first control unit 503 is configured to determine, according to the pedestrian movement direction included in the movement information, the shifting direction of the LED chip corresponding to the pedestrian movement direction. The first control unit 503 is also configured to determine limit number of mobile LED chips according to total number of LED chips of the exterior LED strip light, number of the initial LED chips, and positions of the initial LED chips. The first control unit 503 is also configured to determine, according to the limit number of the LED chips and a preset first angle, an angle corresponding to each of the mobile LED chips, wherein the first angle is an angle between the central axis of the vehicle and a detection range boundary of a real-time pedestrian position included in the movement information. The first control unit 503 is also configured to determine, according to the angle between the real-time pedestrian position and the central axis and the angle corresponding to each of the mobile LED chips in the exterior LED strip light, an LED chip movement quantity corresponding to the real-time pedestrian position. The first control unit 503 is also configured to move , on the basis of the initial LED chip, the target LED chip to be lighted up by a position of the LED chip movement quantity according to the shifting direction of the LED chip, to output the first headlight effect in response to movement of the pedestrian by lighting up the target LED chip.

By implementing this implementation, the first control unit 503 may output the first headlight effect in response to movement of the pedestrian.

As an alternative implementation, a specific implementation of the first control unit 503 being configured to move, on the basis of the initial LED chip, a target LED chip to be lighted up by a position of the LED chip movement quantity according to the shifting direction of the LED chip, to output the first headlight effect in response to movement of the pedestrian by lighting up the target LED chip may be as below.

The first control unit 503 is configured to control the first light strip and the second light strip to synchronously shift by the position of the LED chip movement quantity according to the shifting direction of the LED chip. By implementing this implementation, the above two light strips shift in response to movement of the pedestrian.

As another alternative implementation, a specific implementation of the first control unit 503 being configured to move, on the basis of the initial LED chip, a target LED chip to be lighted up by a position of the LED chip movement quantity according to the shifting direction of the LED chip, to output the first headlight effect in response to movement of the pedestrian by lighting up the target LED chip may be as below.

The first control unit 503 is configured to recognize a relative orientation of the real-time pedestrian position with respect to the central axis of the vehicle, and control the light strip corresponding to the relative orientation to shift by the position of the LED chip movement quantity according to the movement direction of the LED chip. When the relative orientation indicates that the real-time pedestrian position is on the left side of the central axis of the vehicle, the light strip corresponding to the relative orientation is the first light strip. When the relative orientation indicates that the real-time pedestrian position is on the right side of the central axis of the vehicle, the light strip corresponding to the relative orientation is the second light strip.

In addition, alternatively, in the system for human-vehicle interaction as shown in FIG 11, the detecting unit 502 may be specifically configured to: determine, when unlocking the vehicle and detecting pedestrians exist outside the vehicle, whether the pedestrians are on the same side of the vehicle; and detect, if the determination result is YES, a real-time position of a pedestrian closest to the vehicle when detecting that more than one pedestrian is outside the vehicle, and obtain the movement information of the pedestrian outside the vehicle according to the real-time position. The vehicle does not output any headlight effect unless all the pedestrians outside the vehicle are on the same side of the vehicle, and the outputted headlight effect is characterized by the headlight shifting in response to movement of the pedestrian closest to the vehicle, such that the pedestrian closest to the vehicle may the most intuitively experience the headlight effect outputted from the vehicle. In this way, the human-vehicle interaction experience can be maximized, making the human-vehicle interaction more intelligent.

Further alternatively, the system for human-vehicle interaction as shown in FIG 11 may also include:
a second control unit 504, configured to control the vehicle to output the first sound effect corresponding to the unlocking instruction. That is, when receiving the unlocking instruction, the unlocking unit 501 may trigger the second control unit 504 to prompt the user, through the sound effect, that the vehicle has been unlocked, such that the prompt effect may be enhanced visually and auditorily.

Still further alternatively, the first control unit 503 also may be configured to control, when receiving a vehicle-locating instruction for the vehicle, the vehicle to output a second headlight effect corresponding to the vehicle-locating instruction, and control the vehicle to stop outputting the second headlight effect when receiving the unlocking instruction.

The second control unit 504 also may be configured to control the vehicle, when receiving the vehicle-locating instruction for the vehicle, to output a second sound effect corresponding to the vehicle-locating instruction, and control the vehicle to stop outputting the second sound effect when receiving the unlocking instruction.

That is, in this embodiment of the present disclosure, the system for human-vehicle interaction may also assist, after the user triggers the vehicle-locating instruction, the user to locate the vehicle by outputting headlight and sound. Furthermore, after receiving the unlocking instruction, the system for human-vehicle interaction may automatically stop outputting the headlight and the sound for vehicle locating, and switch to the headlight and the sound for vehicle unlocking.

As can be seen, by implementing the system for human-vehicle interaction as shown in FIG 11, the user may be assisted to locate the vehicle by means of the second headlight effect and the second sound effect. After the user successfully locates the vehicle and unlocks the vehicle, the system for human-vehicle interaction may continuously output the first headlight effect and the second sound effect to prompt the user that the vehicle has been unlocked. In this way, the prompt effect is enhanced visually and auditorily to reduce the number of times of the unlocking operations for the user. Further, a headlight effect similar to "eyes" may be created by outputting two light strips. During the movement of the pedestrian, the "eyes" of the vehicle also move, thereby creating a more interactive human-vehicle interaction effect. Still further, when there is more than one pedestrian outside the vehicle, the headlight effect interacts with the pedestrian closest to the vehicle. In this way, the human-vehicle interaction experience may be maximized, thereby making the human-vehicle interaction more intelligent.

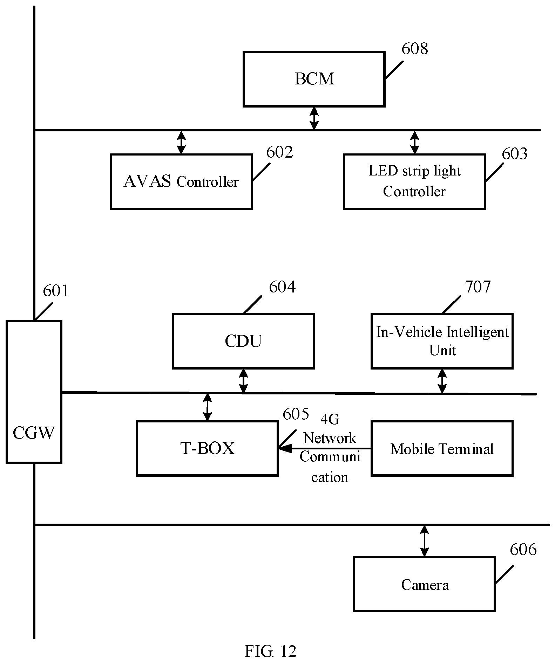

Referring to FIG 12, FIG 12 illustrates a schematic structural diagram of still another system for human-vehicle interaction according to an embodiment of the present disclosure. As shown in FIG 12, the system for human-vehicle interaction may include:
a central gateway (CGW) 601, an acoustic vehicle alerting system (AVAS) controller 602, a LED strip light controller 603, a central display unit (CDU) 604, a Telematics Box (T-BOX) 605, a camera 606, an in-vehicle intelligent unit 607, and a body control module (BCM) 608, etc. Specifically, the AVAS controller 602 and the LED strip light controller 603 may be connected to the CGW 601 through a body CAN (BCAN). The CDU 604, the T-BOX 605 and the in-vehicle intelligent unit 607 may be connected to the CGW 601 through Industry CAN-bus Application Protocol (ICAN). The BCM 608 may be connected to the CGW 601 through Entertainment CAN (ECAN). The camera 606 and an intelligent driving module 609 may also be connected to the CGW 601.

Each of the above controllers and control modules may be any electronic control unit (ECU) of the vehicle. The CGW 601 is configured to connect the aforementioned controllers and sensors, to establish interconnections between different networks in the vehicle and transmit data.

The system for human-vehicle interaction disclosed in the embodiments of the present disclosure is specifically introduced below with reference to FIG 12.

The BCM 608 is configured to receive an unlocking instruction transmitted by an electronic key of the vehicle through a wireless signal, and unlock the vehicle after receiving the unlocking instruction. Alternatively, the BCM 608 is also configured to receive a vehicle-locating instruction transmitted by the electronic key of the vehicle through a wireless signal.

The T-BOX 605 is configured to receive the unlocking instruction transmitted by a mobile terminal such as a smart phone having a communication connection with the vehicle, and trigger the BCM 608 to unlock the vehicle. Alternatively, the T-BOX 605 may also be configured to receive the vehicle-locating instruction transmitted by the mobile terminal such as the smart phone having the communication connection with the vehicle.

The camera 606 is configured to capture an image and transmit the captured image to the in-vehicle intelligent unit 607. The in-vehicle intelligent unit 607 is configured to perform identity recognition on a face in the image, trigger the unlocking instruction when the face in the image is recognized as a preset authenticated face, and trigger the BCM 608 to unlock the vehicle.

The in-vehicle intelligent unit 607 is also configured to receive the image captured by the camera 606 after the BCM 608 unlocks the vehicle, detect movement information of a pedestrian outside the vehicle based on the image, and transmit the movement information to the CDU 604.

The CDU 604 is configured to determine, according to the movement information, a first headlight effect in response to movement of the pedestrian, and transmit a control logic of the first headlight effect to the LED strip light controller 603, such that the LED strip light controller 603 controls a lamp of the vehicle to output the first headlight effect in response to movement of the pedestrian. Moreover, the CDU 604 is configured to query, according to the unlocking instruction received by the BCM 608, a first sound effect corresponding to the unlocking instruction, and transmit the first sound effect to the AVAS controller 602, such that the AVAS controller 602 controls a speaker of the vehicle to output the first sound effect. Furthermore, the CDU 604 is configured to query, according to the vehicle-locating instruction received by the BCM 608, a second headlight effect and a second sound effect corresponding to the vehicle-locating instruction, and transmit the second headlight effect and the second sound effect to the LED strip light controller 603 and the AVAS controller 602 respectively, such that the LED strip light controller 603 controls the LED strip light of the vehicle to output the second headlight effect, and the AVAS controller 602 controls the speaker of the vehicle to output the second sound effect.

The embodiments of the present disclosure disclose a computer-readable storage medium, storing a computer program, wherein the computer program enables a computer to perform any one of the methods for human-vehicle interaction during vehicle unlocking as shown in FIG 1, FIG 3, or FIG 9.

The embodiments of the present disclosure disclose a computer program product, which includes a non-transitory computer-readable storage medium storing a computer program, wherein the computer program is executed, such that a computer is caused to perform any one of the methods for human-vehicle interaction during vehicle unlocking as shown in FIG 1, FIG 3, or FIG 9.

The embodiments of the present disclosure disclose a vehicle, which includes any one of the systems for human-vehicle interaction as shown in FIG 10 to FIG 12.

It is to be understood that "one embodiment" or "an embodiment" mentioned throughout the description means that particular features, structures or characteristics described in combination with the embodiments are included in at least one embodiment of the present disclosure. Therefore, "in one embodiment" or "in an embodiment" mentioned throughout the description does not necessarily refer to the same embodiment. In addition, these particular features, structures or characteristics may be combined in one or more embodiments in any suitable manner. Those skilled in the art should also learn that the embodiments described in the specification are preferred embodiments, and involved motions and modules are not necessary for the present disclosure. In addition, a sequence number of each step does not mean an execution sequence, and the execution sequence of each step shall be determined by its function and an internal logic, and shall not impose any limit on the implementation process of the embodiments of the present disclosure. Further, the units described as separate parts may or may not be physically separate, and parts displayed as units may or may not be physical units, i.e., either located at one place or distributed on a plurality of network units. Units may be selected in part or in whole according to actual needs for achieving objectives of the solution of this embodiment. Functional units in the embodiments of the present disclosure may be integrated into one processing unit, or each of the units may exist alone physically, or two or more units are integrated into one unit. The foregoing integrated units may either be implemented in the form of hardware or be implemented in the form of software function units.

It may be appreciated by those of ordinary skill in the art that all or some of the steps of the methods in the above embodiments may be performed by relevant hardware as instructed by a program. The program may be stored in a computer-readable storage medium. The storage medium includes a read-only memory (ROM), a random access memory (RAM), a programmable read-only memory (PROM), an erasable programmable read only memory (EPROM), a one-time programmable read-only memory (OTPROM), an electrically-erasable programmable read-only memory (EEPROM), a compact disc read-only memory (CD-ROM), or other optical disk memory, magnetic disk memory, magnetic tape memory, or any other computer-readable storage medium that can be configured to carry or store data.

The method and system for human-vehicle interaction during vehicle unlocking and the vehicle disclosed by the embodiments of the present disclosure are described above in detail. Elaboration of principles and implementations of the present disclosure is made by using specific examples herein, and the description of the foregoing embodiments is merely intended to assist in understanding the method of the present disclosure and the core concept thereof. Also, those of ordinary skill in the art may change, in accordance with the concept of the present disclosure, a concrete implementation and a scope of application. In conclusion, contents of the specification shall be not interpreted as limiting the present disclosure.

## Claims

1. A method for human-vehicle interaction during vehicle unlocking, the method comprises:
unlocking (101) a vehicle when an unlocking instruction for the vehicle is received;
detecting (102) movement information of a pedestrian outside the vehicle after the vehicle is unlocked; and
controlling (103) an exterior LED strip light of the vehicle to output a first headlight effect in response to movement of the pedestrian, wherein the first headlight effect behaves as a shifting direction of a target LED chip to be lighted up being corresponding to a pedestrian movement direction comprised in the movement information,
wherein a duration of the first headlight effect is preset, and it is stopped outputting the first headlight effect when an output duration of the first headlight effect exceeds the preset duration;
after receiving the unlocking instruction, the method further comprises: controlling (301) an initial LED chip preinstalled in the exterior LED strip light of the vehicle to be lighted up;
**characterized in that**, the controlling (103) an exterior LED strip light of the vehicle to output a first headlight effect in response to movement of the pedestrian comprises:
determining (303), according to the pedestrian movement direction comprised in the movement information, the shifting direction of the LED chip corresponding to the pedestrian movement direction;
determining (304) limit number of mobile LED chips according to total number of LED chips of the exterior LED strip light, number of the initial LED chips, and positions of the initial LED chips;
determining (305), according to the limit number of the mobile LED chips and a preset first angle, an angle corresponding to each of the mobile LED chips, wherein the first angle is an angle between a central axis of the vehicle and a detection range boundary of a real-time pedestrian position comprised in the movement information;
determining (306), according to the angle between the real-time pedestrian position and the central axis and the angle corresponding to each of the mobile LED chips in the exterior LED strip light, an LED chip movement quantity corresponding to the real-time pedestrian position; and
shifting (307), on a basis of the initial LED chip, the target LED chip to be lighted up by a position of the LED chip movement quantity according to the shifting direction of the LED chip, to output the first headlight effect in response to movement of the pedestrian by lighting up the target LED chip.

2. The method according to claim 1, wherein the controlling (301) an initial LED chip preinstalled in the exterior LED strip light of the vehicle to be lighted up comprises:
controlling a first number of LED chips, on a left side of the central axis, in the exterior LED strip light of the vehicle to be lighted up to form a first light strip;
controlling a second number of LED chips, on a right side of the central axis, in the exterior LED strip light of the vehicle to be lighted up to form a second light strip; and
controlling a third number of LED chips between the first light strip and the second light strip to remain extinguished;
wherein sum of the first number and the second number is equal to the number of the initial LED chips.

3. The method according to any one of claims 1 to 2, wherein the detecting movement information of a pedestrian outside the vehicle comprises:
determining, when detecting that a pedestrian exists outside the vehicle, whether the pedestrian is on a same side of the vehicle; and
detecting, if the determination result is YES, a real-time position of a pedestrian closest to the vehicle when detecting that more than one pedestrian is outside the vehicle, and obtaining the movement information of the pedestrian outside the vehicle according to the real-time position.

4. The method according to claim 3, wherein the method further comprises:
controlling the vehicle to output a first sound effect corresponding to the unlocking instruction.

5. The method according to claim 4, wherein the method further comprises:
controlling, when receiving a vehicle-locating instruction for the vehicle, the vehicle to output a second headlight effect and a second sound effect corresponding to the vehicle-locating instruction; and
controlling, when receiving the unlocking instruction, the vehicle to stop outputting the second headlight effect and the second sound effect.

6. The method according to claim 4, wherein the method further comprises:
controlling, when receiving a vehicle-locating instruction for the vehicle, the vehicle to output a second headlight effect or a second sound effect corresponding to the vehicle-locating instruction; and
controlling, when receiving the unlocking instruction, the vehicle to stop outputting the second headlight effect or the second sound effect.

7. A system for human-vehicle interaction, comprising:
an unlocking unit (501), configured to unlock a vehicle when an unlocking instruction for the vehicle is received;
a detecting unit (502), configured to detect movement information of a pedestrian outside the vehicle after the vehicle is unlocked; and
a first control unit (503), configured to control an exterior LED strip light of the vehicle to output a first headlight effect in response to movement of the pedestrian, wherein the first headlight effect behaves as a shifting direction of a target LED chip to be lighted up being corresponding to a pedestrian movement direction comprised in the movement information,
wherein a duration of the first headlight effect is preset, and it is stopped outputting the first headlight effect when an output duration of the first headlight effect exceeds the preset duration;
**characterized in that**,
the first control unit (503) is further configured to:
control an initial LED chip preinstalled in the exterior LED strip light of the vehicle to be lighted up after receiving the unlocking instruction;
determine, according to the pedestrian movement direction comprised in the movement information, the shifting direction of the LED chip corresponding to the pedestrian movement direction;
determine limit number of mobile LED chips according to total number of LED chips of the exterior LED strip light, number of the initial LED chips, and positions of the initial LED chips;
determine, according to the limit number of the mobile LED chips and a preset first angle, an angle corresponding to each of the mobile LED chips, the first angle being an angle between a central axis of the vehicle and a detection range boundary of a real-time pedestrian position comprised in the movement information;
determine, according to the angle between the real-time pedestrian position and the central axis and the angle corresponding to each of the mobile LED chips in the exterior LED strip light, an LED chip movement quantity corresponding to the real-time pedestrian position; and
move, on a basis of the initial LED chip, the target LED chip to be lighted up by a position of the LED chip movement quantity according to the shifting direction of the LED chip, to output the first headlight effect in response to movement of the pedestrian by lighting up the target LED chip.

8. The system according to claim 7, wherein the first control unit (503) is further configured to:
control a first number of LED chips, on a left side of the central axis, in the exterior LED strip light of the vehicle to be lighted up to form a first light strip;
control a second number of LED chips, on a right side of the central axis, in the exterior LED strip light of the vehicle to be lighted up to form a second light strip; and
control a third number of LED chips between the first light strip and the second light strip to remain extinguished;
wherein sum of the first number and the second number is equal to the number of the initial LED chips.

9. The system according to any one of claims 7 to 8, wherein
the detecting unit (502) is configured to:
determine, when unlocking the vehicle and detecting a pedestrian exists outside the vehicle, whether the pedestrian is on a same side of the vehicle; and
detect, if the determination result is yes, a real-time position of a pedestrian closest to the vehicle when detecting that more than one pedestrian is outside the vehicle, and obtain the movement information of the pedestrian outside the vehicle according to the real-time position.

10. The system according to claim 9, wherein the system further comprises:
a second control unit (504), configured to control the vehicle to output a first sound effect corresponding to the unlocking instruction.

11. The system according to any one of claims 7-10, wherein
the first control unit is further configured to control, when receiving a vehicle-locating instruction for the vehicle, the vehicle to output a second headlight effect corresponding to the vehicle-locating instruction, and control the vehicle to stop outputting the second headlight effect when receiving the unlocking instruction.

12. The system according to claim 10 or 11, wherein
the second control unit (504) is further configured to control, when receiving a vehicle-locating instruction for the vehicle, the vehicle to output a second sound effect corresponding to the vehicle-locating instruction, and control the vehicle to stop outputting the second sound effect when receiving the unlocking instruction.

13. A vehicle, comprising the system for human-vehicle interaction according to any one of claims 7 to 12.

## Patentansprüche

1. Verfahren zur Mensch-Fahrzeug-Interaktion beim Entriegeln eines Fahrzeugs, wobei das Verfahren Folgendes beinhaltet:
Entriegeln (101) eines Fahrzeugs, wenn ein Entriegelungsbefehl für das Fahrzeug empfangen wird;
Erfassen (102) von Bewegungsinformationen eines Fußgängers außerhalb des Fahrzeugs nach dem Entriegeln des Fahrzeugs; und
Steuern (103) einer externen LED-Lichtleiste des Fahrzeugs zum Ausgeben eines ersten Scheinwerfereffekts als Reaktion auf eine Bewegung des Fußgängers, wobei sich der erste Scheinwerfereffekt als eine Verschiebungsrichtung eines Ziel-LED-Chips zum Aufleuchten entsprechend einer in den Bewegungsinformationen enthaltenen Fußgängerbewegungsrichtung verhält,
wobei eine Dauer des ersten Scheinwerfereffekts voreingestellt ist und die Ausgabe des ersten Scheinwerfereffekts gestoppt wird, wenn eine Ausgabedauer des ersten Scheinwerfereffekts die voreingestellte Dauer überschreitet;
wobei das Verfahren nach dem Empfang des Entriegelungsbefehls ferner das Steuern (301) eines in der externen LED-Lichtleiste des Fahrzeugs vorinstallierten Ausgangs-LED-Chips zum Aufleuchten beinhaltet,
**dadurch gekennzeichnet, dass** das Steuern (103) einer äußeren LED-Lichtleiste des Fahrzeugs zum Ausgeben eines ersten Scheinwerfereffekts als Reaktion auf eine Bewegung des Fußgängers Folgendes beinhaltet:
Bestimmen (303) der Verschiebungsrichtung des LED-Chips entsprechend der Fußgängerbewegungsrichtung gemäß der in den Bewegungsinformationen enthaltenen Fußgängerbewegungsrichtung;
Bestimmen (304) der Grenzzahl von mobilen LED-Chips gemäß der Gesamtzahl von LED-Chips der externen LED-Lichtleiste, der Anzahl der Ausgangs-LED-Chips und der Positionen der Ausgangs-LED-Chips;
Bestimmen (305), gemäß der Grenzzahl der mobilen LED-Chips und einem voreingestellten ersten Winkel, eines Winkels entsprechend jedem der mobilen LED-Chips, wobei der erste Winkel ein Winkel zwischen einer Mittelachse des Fahrzeugs und einer Erfassungsbereichsbegrenzung einer in den Bewegungsinformationen enthaltenen Echtzeit-Fußgängerposition ist;
Bestimmen (306) einer LED-Chip-Bewegungsgröße entsprechend der Echtzeit-Fußgängerposition gemäß dem Winkel zwischen der Echtzeit-Fußgängerposition und der Mittelachse und dem Winkel entsprechend jedem der mobilen LED-Chips in der externen LED-Lichtleiste; und
Verschieben (307), auf Basis des Ausgangs-LED-Chips, des Ziel-LED-Chips zum Aufleuchten um eine Position der LED-Chip-Bewegungsgröße gemäß der Verschiebungsrichtung des LED-Chips, um den ersten Scheinwerfereffekt als Reaktion auf die Bewegung des Fußgängers durch Aufleuchtenlassen des Ziel-LED-Chips auszugeben.

2. Verfahren nach Anspruch 1, wobei das Steuern (301) eines in der externen LED-Lichtleiste des Fahrzeugs vorinstallierten Ausgangs-LED-Chips zum Aufleuchten Folgendes beinhaltet:
Steuern einer ersten Anzahl von LED-Chips, auf einer linken Seite der Mittelachse, in der externen LED-Lichtleiste des Fahrzeugs zum Aufleuchten, um eine erste Lichtleiste zu bilden;
Steuern einer zweiten Anzahl von LED-Chips, auf einer rechten Seite der Mittelachse, in der externen LED-Lichtleiste des Fahrzeugs zum Aufleuchten, um eine zweite Lichtleiste zu bilden; und
Steuern einer dritten Anzahl von LED-Chips zwischen der ersten Lichtleiste und der zweiten Lichtleiste zum Nichtaufleuchten;
wobei die Summe aus der ersten Anzahl und der zweiten Anzahl gleich der Anzahl der Ausgangs-LED-Chips ist.

3. Verfahren nach einem der Ansprüche 1 bis 2, wobei das Erfassen von Bewegungsinformationen eines Fußgängers außerhalb des Fahrzeugs Folgendes beinhaltet:
Bestimmen, wenn erfasst wird, dass ein Fußgänger außerhalb des Fahrzeugs vorhanden ist, ob sich der Fußgänger auf einer selben Seite des Fahrzeugs befindet; und
Erfassen, wenn das Bestimmungsergebnis JA ist, einer Echtzeitposition eines Fußgängers, der dem Fahrzeug am nächsten ist, wenn erfasst wird, dass sich mehr als ein Fußgänger außerhalb des Fahrzeugs befindet, und Erhalten der Bewegungsinformationen des Fußgängers außerhalb des Fahrzeugs gemäß der Echtzeitposition.

4. Verfahren nach Anspruch 3, wobei das Verfahren ferner Folgendes beinhaltet:
Steuern des Fahrzeugs zum Ausgeben eines ersten Toneffekts, der dem Entriegelungsbefehl entspricht.

5. Verfahren nach Anspruch 4, wobei das Verfahren ferner Folgendes beinhaltet:
Steuern, beim Empfang eines Fahrzeugortungsbefehls für das Fahrzeug, des Fahrzeugs zum Ausgeben eines zweiten Scheinwerfereffekts und eines zweiten Toneffekts entsprechend dem Fahrzeugortungsbefehl; und
Steuern, beim Empfang des Entriegelungsbefehls, des Fahrzeugs zum Stoppen der Ausgabe des zweiten Scheinwerfereffekts und des zweiten Toneffekts.

6. Verfahren nach Anspruch 4, wobei das Verfahren ferner Folgendes beinhaltet:
Steuern, beim Empfang eines Fahrzeugortungsbefehls für das Fahrzeug, des Fahrzeugs zum Ausgeben eines zweiten Scheinwerfereffekts oder eines zweiten Toneffekts entsprechend dem Fahrzeugortungsbefehl; und
Steuern, beim Empfang des Entriegelungsbefehls, des Fahrzeugs zum Stoppen der Ausgabe des zweiten Scheinwerfereffekts oder des zweiten Toneffekts.

7. System für Mensch-Fahrzeug-Interaktion, das Folgendes umfasst:
eine Entriegelungseinheit (501), konfiguriert zum Entriegeln eines Fahrzeugs, wenn ein Entriegelungsbefehl für das Fahrzeug empfangen wird;
eine Erfassungseinheit (502), konfiguriert zum Erfassen von Bewegungsinformationen eines Fußgängers außerhalb des Fahrzeugs nach dem Entriegeln des Fahrzeugs; und
eine erste Steuereinheit (503), konfiguriert zum Steuern einer externen LED-Lichtleiste des Fahrzeugs zum Ausgeben eines ersten Scheinwerfereffekts als Reaktion auf eine Bewegung des Fußgängers, wobei sich der erste Scheinwerfereffekt als eine Verschiebungsrichtung eines Ziel-LED-Chips zum Aufleuchten entsprechend einer in den Bewegungsinformationen enthaltenen Fußgängerbewegungsrichtung verhält,
wobei eine Dauer des ersten Scheinwerfereffekts voreingestellt ist und die Ausgabe des ersten Scheinwerfereffekts gestoppt wird, wenn eine Ausgabedauer des ersten Scheinwerfereffekts die voreingestellte Dauer überschreitet;
**dadurch gekennzeichnet, dass**
die erste Steuereinheit (503) ferner konfiguriert ist zum:
Steuern eines in der externen LED-Lichtleiste des Fahrzeugs vorinstallierten Ausgangs-LED-Chips zum Aufleuchten nach dem Empfang des Entriegelungsbefehls;
Bestimmen der Verschiebungsrichtung des LED-Chips entsprechend der Fußgängerbewegungsrichtung gemäß der in den Bewegungsinformationen enthaltenen Fußgängerbewegungsrichtung;
Bestimmen der Grenzzahl von mobilen LED-Chips gemäß der Gesamtzahl der LED-Chips der externen LED-Lichtleiste, der Anzahl der Ausgangs-LED-Chips und der Positionen der Ausgangs-LED-Chips;
Bestimmen, gemäß der Grenzzahl der mobilen LED-Chips und eines voreingestellten ersten Winkels, eines Winkels entsprechend jedem der mobilen LED-Chips, wobei der erste Winkel ein Winkel zwischen einer Mittelachse des Fahrzeugs und einer Erfassungsbereichsbegrenzung einer in den Bewegungsinformationen enthaltenen Echtzeit-Fußgängerposition ist;
Bestimmen einer LED-Chip-Bewegungsgröße entsprechend der Echtzeit-Fußgängerposition gemäß dem Winkel zwischen der Echtzeit-Fußgängerposition und der Mittelachse und dem Winkel entsprechend jedem der mobilen LED-Chips in der extemen-LED-Lichtleiste; und
Bewegen, auf Basis des Ausgangs-LED-Chips, des Ziel-LED-Chips zum Aufleuchten um eine Position der LED-Chip-Bewegungsgröße gemäß der Verschiebungsrichtung des LED-Chips, um den ersten Scheinwerfereffekt als Reaktion auf eine Bewegung des Fußgängers durch Aufleuchtenlassen des Ziel-LED-Chips auszugeben.

8. System nach Anspruch 7, wobei die erste Steuereinheit (503) ferner konfiguriert ist zum:
Steuern einer ersten Anzahl von LED-Chips, auf einer linken Seite der Mittelachse, in der externen LED-Lichtleiste des Fahrzeugs zum Aufleuchten, um eine erste Lichtleiste zu bilden;
Steuern einer zweiten Anzahl von LED-Chips, auf einer rechten Seite der Mittelachse, in der externen LED-Lichtleiste des Fahrzeugs zum Aufleuchten, um eine zweite Lichtleite zu bilden; und
Steuern einer dritten Anzahl von LED-Chips zwischen der ersten Lichtleiste und der zweiten Lichtleiste zum Nichtaufleuchten;
wobei die Summe aus der ersten Anzahl und der zweiten Anzahl gleich der Anzahl der Ausgangs-LED-Chips ist.

9. System nach einem der Ansprüche 7 bis 8, wobei die Erfassungseinheit (502) konfiguriert ist zum:
Bestimmen, beim Entriegeln des Fahrzeugs und beim Erfassen, dass ein Fußgänger außerhalb des Fahrzeugs vorhanden ist, ob sich der Fußgänger auf einer selben Seite des Fahrzeugs befindet; und
Erfassen, wenn das Bestimmungsergebnis ja ist, einer Echtzeitposition eines Fußgängers, der dem Fahrzeug am nächsten ist, wenn erfasst wird, dass sich mehr als ein Fußgänger außerhalb des Fahrzeugs befindet, und Erhalten der Bewegungsinformationen des Fußgängers außerhalb des Fahrzeugs gemäß der Echtzeitposition.

10. System nach Anspruch 9, wobei das System ferner Folgendes umfasst:
eine zweite Steuereinheit (504), konfiguriert zum Steuern des Fahrzeugs zum Ausgeben eines ersten Toneffekts entsprechend dem Entriegelungsbefehl.

11. System nach einem der Ansprüche 7-10, wobei
die erste Steuereinheit ferner zum Steuern, beim Empfang eines Fahrzeugortungsbefehls für das Fahrzeug, des Fahrzeugs zum Ausgeben eines zweiten Scheinwerfereffekts entsprechend dem Fahrzeugortungsbefehls und zum Steuern des Fahrzeugs zum Stoppen der Ausgabe des zweiten Scheinwerfereffekts beim Empfang des Entriegelungsbefehls konfiguriert ist.

12. System nach Anspruch 10 oder 11, wobei
die zweite Steuereinheit (504) ferner zum Steuern, beim Empfang eines Fahrzeugortungsbefehls für das Fahrzeug, des Fahrzeugs zum Ausgeben eines zweiten Toneffekts entsprechend dem Fahrzeugortungsbefehl und zum Steuern des Fahrzeugs zum Stoppen der Ausgabe des zweiten Toneffekts beim Empfang des Entriegelungsbefehls konfiguriert ist.

13. Fahrzeug, das das System für Mensch-Fahrzeug-Interaktion nach einem der Ansprüche 7 bis 12 umfasst.

## Revendications

1. Procédé d'interaction homme-véhicule lors d'un déverrouillage de véhicule, le procédé comprenant :
un déverrouillage (101) d'un véhicule lorsqu'une instruction de déverrouillage pour le véhicule est reçue ;
une détection (102) d'informations de mouvement d'un piéton hors du véhicule après le déverrouillage du véhicule ; et
une commande (103) d'un cordon lumineux à LED extérieur du véhicule pour produire un premier effet de phares en réponse à un mouvement du piéton, dans lequel le premier effet de phares se comporte comme un décalage de direction d'une puce LED cible destinée à être allumée de manière à correspondre à une direction de mouvement de piéton comprise dans les informations de mouvement,
dans lequel une durée du premier effet de phares est prédéfinie, et la production du premier effet de phares est arrêtée lorsqu'une durée de production du premier effet de phares dépasse la durée prédéfinie ;
après une réception de l'instruction de déverrouillage, le procédé comprend en outre : une commande (301) d'une puce LED initiale préinstallée dans le cordon lumineux à LED extérieur du véhicule pour qu'elle s'allume ;
**caractérisé en ce que**, la commande (103) d'un cordon lumineux à LED extérieur du véhicule pour une production d'un premier effet de phares en réponse à un mouvement du piéton comprend :
une détermination (303), selon la direction de mouvement de piéton comprise dans les informations de mouvement, de la direction de décalage de la puce LED correspondant à la direction de mouvement de piéton ;
une détermination (304) d'un nombre limite de puces LED mobiles selon un nombre total de puces LED du cordon lumineux à LED extérieur, un nombre de puces LED initiales, et des positions des puces LED initiales ;
une détermination (305), selon le nombre limite des puces LED mobiles et un premier angle prédéfini, d'un angle correspondant à chacune des puces LED mobiles, dans lequel le premier angle est un angle entre un axe central du véhicule et une limite de plage de détection d'une position de piéton en temps réel comprise dans les informations de mouvement ;
une détermination (306), selon l'angle entre la position de piéton en temps réel et l'axe central et l'angle correspondant à chacune des puces LED mobiles dans le cordon lumineux à LED extérieur, d'une quantité de mouvement de puce LED correspondant à la position de piéton en temps réel ; et
un décalage (307), sur la base de la puce LED initiale, de la puce LED cible devant être allumée d'une position de la quantité de mouvement de puce LED selon la direction de décalage de la puce LED, pour produire le premier effet de phares en réponse à un mouvement du piéton en allumant la puce LED cible.

2. Procédé selon la revendication 1, dans lequel la commande (301) d'une puce LED initiale préinstallée dans le cordon lumineux à LED extérieur du véhicule pour qu'elle s'allume comprend :
une commande d'un premier nombre de puces LED, sur un côté gauche de l'axe central, dans le cordon lumineux à LED extérieur du véhicule pour qu'elles s'allument pour former un premier cordon lumineux ;
une commande d'un deuxième nombre de puces LED, sur un côté droit de l'axe central, dans le cordon lumineux à LED extérieur du véhicule pour qu'elles s'allument pour former un second cordon lumineux ; et
une commande d'un troisième nombre de puces LED entre le premier cordon lumineux et le second cordon lumineux pour qu'elles restent éteintes ;
dans lequel une somme du premier nombre et du deuxième nombre est égale au nombre de puces LED initiales.

3. Procédé selon l'une quelconque des revendications 1 à 2, dans lequel la détection d'informations de mouvement d'un piéton hors du véhicule comprend :
une détermination, lors d'une détection du fait qu'un piéton est présent hors du véhicule, du fait que le piéton est d'un même côté du véhicule ou non ; et
une détection, si le résultat de détermination est OUI, d'une position en temps réel d'un piéton le plus proche du véhicule lors d'une détection du fait que plus d'un piéton se trouve hors du véhicule, et une obtention des informations de mouvement du piéton hors du véhicule selon la position en temps réel.

4. Procédé selon la revendication 3, dans lequel le procédé comprend en outre :
une commande du véhicule pour produire un premier effet sonore correspondant à l'instruction de déverrouillage.

5. Procédé selon la revendication 4, dans lequel le procédé comprend en outre :
une commande, lors d'une réception d'une instruction de localisation de véhicule pour le véhicule, du véhicule pour produire un second effet de phares et un second effet sonore correspondant à l'instruction de localisation de véhicule ; et
une commande, lors d'une réception de l'instruction de déverrouillage, du véhicule pour arrêter de produire le second effet de phares et le second effet sonore.

6. Procédé selon la revendication 4, dans lequel le procédé comprend en outre :
une commande, lors d'une réception d'une instruction de localisation de véhicule pour le véhicule, du véhicule pour produire un second effet de phares ou un second effet sonore correspondant à l'instruction de localisation de véhicule ; et
une commande, lors d'une réception de l'instruction de déverrouillage, du véhicule pour arrêter de produire le second effet de phares ou le second effet sonore.

7. Système d'interaction homme-véhicule, comprenant :
une unité de déverrouillage (501), configurée pour déverrouiller un véhicule lorsqu'une instruction de déverrouillage pour le véhicule est reçue ;
une unité de détection (502), configurée pour détecter des informations de mouvement d'un piéton hors du véhicule après le déverrouillage du véhicule ; et
une première unité de commande (503), configurée pour commander un cordon lumineux à LED extérieur du véhicule pour produire un premier effet de phares en réponse à un mouvement du piéton, dans lequel le premier effet de phares se comporte comme un décalage de direction d'une puce LED cible destinée à être allumée de manière à correspondre à une direction de mouvement de piéton comprise dans les informations de mouvement,
dans lequel une durée du premier effet de phares est prédéfinie, et la production du premier effet de phares est arrêtée lorsqu'une durée de production du premier effet de phares dépasse la durée prédéfinie ;
**caractérisé en ce que**,
la première unité de commande (503) est en outre configurée pour :
commander une puce LED initiale préinstallée dans le cordon lumineux à LED extérieur du véhicule pour qu'elle s'allume après réception de l'instruction de déverrouillage ;
déterminer, selon la direction de mouvement de piéton comprise dans les informations de mouvement, la direction de décalage de la puce LED correspondant à la direction de mouvement de piéton ;
déterminer un nombre limite de puces LED mobiles selon un nombre total de puces LED du cordon lumineux à LED extérieur, un nombre de puces LED initiales, et des positions des puces LED initiales ;
déterminer, selon le nombre limite des puces LED mobiles et un premier angle prédéfini, un angle correspondant à chacune des puces LED mobiles, le premier angle étant un angle entre un axe central du véhicule et une limite de plage de détection d'une position de piéton en temps réel comprise dans les informations de mouvement ;
déterminer, selon l'angle entre la position de piéton en temps réel et l'axe central et l'angle correspondant à chacune des puces LED mobiles dans le cordon lumineux à LED extérieur, une quantité de mouvement de puce LED correspondant à la position de piéton en temps réel ; et
déplacer, sur la base de la puce LED initiale, la puce LED cible devant être allumée d'une position de la quantité de mouvement de puce LED selon la direction de décalage de la puce LED, pour produire un premier effet de phares en réponse à un mouvement du piéton en allumant la puce LED cible.

8. Système selon la revendication 7, dans lequel la première unité de commande (503) est en outre configurée pour :
commander un premier nombre de puces LED, sur un côté gauche de l'axe central, dans le cordon lumineux à LED extérieur du véhicule pour qu'elles s'allument pour former un premier cordon lumineux ;
commander un deuxième nombre de puces LED, sur un côté droit de l'axe central, dans le cordon lumineux à LED extérieur du véhicule pour qu'elles s'allument pour former un second cordon lumineux ; et
commander un troisième nombre de puces LED entre le premier cordon lumineux et le second cordon lumineux pour qu'elles restent éteintes ;
dans lequel une somme du premier nombre et du deuxième nombre est égale au nombre de puces LED initiales.

9. Système selon l'une quelconque des revendications 7 à 8, dans lequel
l'unité de détection (502) est configurée pour :
déterminer, lors d'un déverrouillage du véhicule et d'une détection du fait qu'un piéton est présent hors du véhicule, le fait que le piéton est d'un même côté du véhicule ou non ; et
détecter, si le résultat de détermination est oui, une position en temps réel d'un piéton le plus proche du véhicule lors d'une détection du fait que plus d'un piéton se trouve hors du véhicule, et obtenir les informations de mouvement du piéton hors du véhicule selon la position en temps réel.

10. Système selon la revendication 9, dans lequel le système comprend en outre :
une seconde unité de commande (504), configurée pour commander le véhicule pour produire un premier effet sonore correspondant à l'instruction de déverrouillage.

11. Système selon l'une quelconque des revendications 7 à 10, dans lequel
la première unité de commande est en outre configurée pour commander le véhicule, lors d'une réception d'une instruction de localisation de véhicule pour le véhicule, pour produire un second effet de phares correspondant à l'instruction de localisation de véhicule, et commander le véhicule pour arrêter de produire le second effet de phares lors d'une réception de l'instruction de déverrouillage.

12. Système selon la revendication 10 ou 11, dans lequel
la seconde unité de commande (504) est en outre configurée pour commander le véhicule, lors d'une réception d'une instruction de localisation de véhicule pour le véhicule, pour produire un second effet sonore correspondant à l'instruction de localisation de véhicule, et commander le véhicule pour arrêter de produire le second effet sonore lors d'une réception de l'instruction de déverrouillage.

13. Véhicule, comprenant le système d'interaction homme-véhicule selon l'une quelconque des revendications 7 à 12.
